# EUROPÄISCHE PATENTANMELDUNG

(11) **EP 0 534 150 A1**
(43) Veröffentlichungstag der Anmeldung: **31.03.1993**
(21) Anmeldenummer: 92114492.9
(22) Anmeldetag: 26.08.1992
(51) Int. Cl.: G02B 5/00, H04N 5/33, G02B 23/12

(54) **Überstrahlungsschutz für ein Nachtsichtgerät**

(30) Priorität: 27.09.1991 DE 4132259
(71) Anmelder: Leica AG, CH-9435 Heerbrugg (CH)
(72) Erfinder: Gruber, René, CH-9443 Widnau (CH)

(57) **Zusammenfassung**

Der Überstrahlungsschutz für ein Nachtsichtgerät besteht aus einer zylinderförmigen Abdeckung (12) aus undurchsichtigem Material, die eine Lichtdurchtrittsöffnung (13) aufweist. Die Abdeckung wird objektseitig auf den Tubus (10) nach Art eines Schutzdeckels aufgesteckt. Wird der undurchsichtige Abschnitt (15) durch Drehen der Abdeckung während des Beobachtens einer nächtlichen Szene auf eine Lichtquelle im Bildfeld gerichtet, werden nicht nur durch diese hervorgerufene Überstrahlungen unterdrückt, sondern auch der Gesamtkontrast im Bildfeld erhöht. Darüber hinaus wird die Lebensdauer der Bildverstärkerröhre aufgrund der verminderten Eingangsstrahlung verlängert. Die Lichtdurchtrittsöffnung in der Abdeckung kann je nach verwendetem Objektiv in ihrer Größe und Form unterschiedlich und auch variabel ausgebildet sein.

## Beschreibung

Die Erfindung betrifft einen Überstrahlungsschutz für ein Nachtsichtgerät mit einem in einem Tubus befestigten Objektiv.

Bei der Beobachtung einer nächtlichen Szene mittels eines Nachtsichtgerätes hoher Restlichtverstärkung treten Überstrahlungs- und Blendeffekte auf, wenn Lichtquellen innerhalb des Gesichtsfeldes vorhanden sind. Damit verbunden ist eine Kontrastverminderung des gesamten Beobachtungsgebietes und eine erschwerte Ablesbarkeit von im Gesichtsfeld des Nachtsichtgerätes angezeigten Informationen.

Aus der DE-33 13 899 A1 ist eine Vorrichtung zum Betrachten eines selbstleuchtenden Anzeigeinstruments bekannt, das auch bei Dunkelheit mit einem Nachtsichtgerät hoher Restlichtverstärkung betrachtbar ist. Um dabei Überstrahlungen zu vermeiden, ist ein erstes optisches Filter betrachterseitig vor dem Anzeigeinstrument und ein zweites optisches Filter vor der Fotokatode des Nachtsichtgerätes angeordnet, wobei diese Filter bestimmte Transmissionseigenschaften in Abhängigkeit von der Wellenlänge aufweisen, die aufeinander abgestimmt sind. Das die Überstrahlung verhindernde zweite Filter besteht aus einer auf den Träger der Fotokatode der Bildverstärkerröhre aufgedampften Al-Sb-Schicht.

Der Erfindung liegt die Aufgabe zugrunde, einen Überstrahlungsschutz für Nachtsichtgeräte anzugeben, der einfach herstellbar und als leicht zu handhabendes Zubehörteil im Bedarfsfall jederzeit zur Verfügung steht und der bei seiner Anwendung die Helligkeit des Gesichtsfeldes praktisch nicht nachteilig beeinflußt.

Gemäß der Erfindung ist diese Aufgabe dadurch gelöst, daß objektseitig vor dem Objektiv eine um dessen Achse drehbar gelagerte Abdeckung aus undurchsichtigem Material angeordnet ist, die eine Lichtdurchtrittsöffnung aufweist.

Überraschenderweise hat sich gezeigt, daß nach dem Aufsetzen dieser schutzdeckelartigen Abdeckung auf den objektseitigen Teil der Objektivfassung keine Abdunkelung des Bildfeldes eintritt, sofern der lichtundurchlässige Teil der Abdeckung vor die störende Lichtquelle gedreht wird. Es tritt lediglich eine weitgehende Kompensation der Überstrahlungs- und Blendeffekte sowie eine Zunahme des Kontrastes im Bildfeld ein.

Da Überstrahlungen auch die Haltbarkeit der Bildröhre von Nachtsichtgeräten verkürzen, wird mit der Abdeckung gemäß der Erfindung gleichzeitig eine Erhöhung der Lebensdauer der Röhre erzielt.

Je nach Art des vorliegenden Objektives und der Ausbildung der störenden Lichtquelle können der lichtundurchlässige Teil bzw. die Lichtdurchtrittsöffnung der Abdeckung unterschiedlich geformt sein. Im Falle eines Spiegelobjektivs ist die Lichtdurchtrittsöffnung vorzugsweise kreisabschnittsförmig ausgebildet und in bezug auf die Objektivachse exzentrisch angeordnet. Bei normalen, d. h. dioptrischen Objektiven kann mit Vorteil eine veränderbare Lichtdurchtrittsöffnung nach Art einer Irisblende oder auch einer Revolverblende vorgesehen sein.

Die Abdeckung wird unmittelbar vor der Frontlinse des Objektivs durch Aufstecken auf den Tubus desselben drehbar befestigt und kann auf diese Weise leicht entfernt oder ausgewechselt werden. Es versteht sich, daß auch andere Anbringungsmöglichkeiten vorgesehen werden können, beispielsweise mittels Rastfedern in der Abdeckung und einer Nut im Tubus, wie sie zur Befestigung von Objektivschutzdeckeln oder Gegenlichtblenden an Kameras dienen.

Die Erfindung wird nachstehend anhand von zwei in der Zeichnung schematisch dargestellten Ausführungsbeispielen erläutert.

Es zeigen:
- Fig. 1: eine perspektivische Ansicht eines Objektivs mit einer Abdeckung gemäß der Erfindung in einer ersten Ausführungsform und
- Fig. 2: eine Abdeckung einer zweiten Ausführungsform in perspektivischer Ansicht.

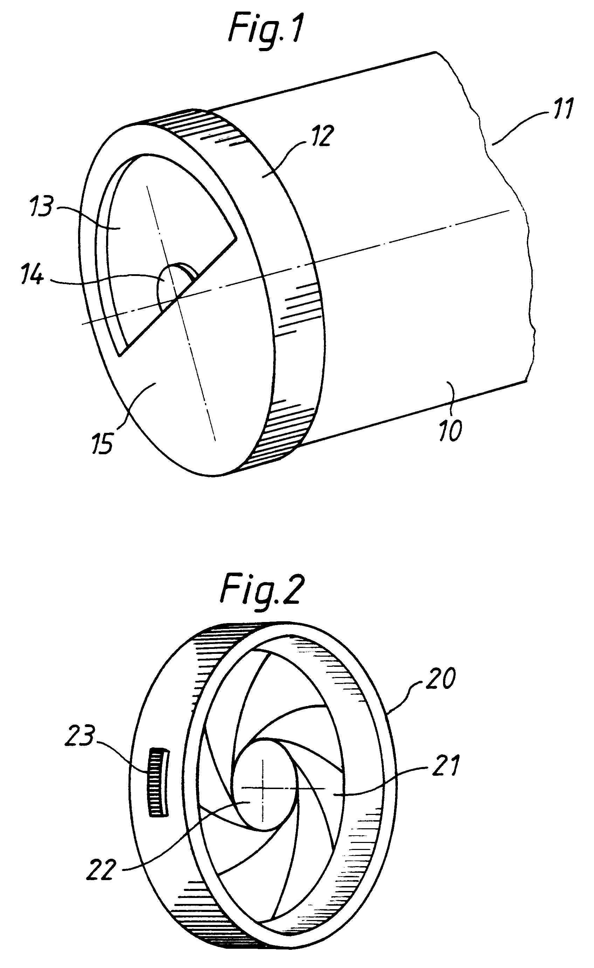

In Fig. 1 ist der vordere Teil eines Tubus 10 eines Spiegelobjektivs 11 gezeigt. Objektseitig ist auf den Tubus 10 eine zylindrische Abdeckung 12 aus undurchsichtigem Material aufgesteckt, die um die Achse des Objektivs 11 drehbar ist. Die Abdeckung 12 weist eine kreisabschnittsförmige Lichtdurchtrittsöffnung 13 auf und ist in bezug auf die Objektivachse exzentrisch angeordnet. Mit 14 ist der Hilfsspiegel des Spiegelobjektivs bezeichnet. Beim Betrachten einer nächtlichen Szene, die Überstrahlungen hervorrufende Lichtquellen aufweist, ist es lediglich erforderlich, die Abdeckung 12 auf den Tubus 10 aufzustecken und derart zu drehen, daß der undurchsichtige Abschnitt 15 auf die Lichtquelle gerichtet ist.

Die in Fig. 2 gezeigte weitere Ausführungsform einer Abdeckung 20 ist nach Art einer Irisblende mit einzelnen Lamellen 21 ausgebildet und eignet sich für dioptrische Objektive. Die Lichtdurchtrittsöffnung 22 ist in ihrer Größe mittels einer Handhabe 23 einstellbar. Bei dieser Ausführungsform kann auf die Drehbarkeit der Abdeckung 20 verzichtet werden.

## Patentansprüche

1. Überstrahlungsschutz für ein Nachtsichtgerät mit einem in einem Tubus befestigten Objektiv, **dadurch gekennzeichnet,** daß objektseitig vor dem Objektiv (11) eine um dessen Achse drehbar gelagerte zylinderförmige Abdeckung (12) aus undurchsichtigem Material angeordnet ist, die eine Lichtdurchtrittsöffnung (13) aufweist.

2. Überstrahlungsschutz nach Anspruch 1, **dadurch gekennzeichnet,** daß die Lichtdurchtrittsöffnung (13) kreisabschnittsförmig ausgebildet und in bezug auf die Achse des Objektivs (11) exzentrisch angeordnet ist.

3. Überstrahlungsschutz nach Anspruch 1, **dadurch gekennzeichnet,** daß die Größe der Lichtaustrittsöffnung (22) mittels einer Handhabe (23) veränderbar ist.
